# EUROPÄISCHE PATENTSCHRIFT

(11) **EP 3 938 679 B1**
(45) Veröffentlichungstag und Bekanntmachung des Hinweises auf die Patenterteilung: **06.12.2023**
(21) Anmeldenummer: 20712948.7
(22) Anmeldetag: 19.03.2020
(51) Int. Cl.: F16G 13/16, H02G 11/00

(54) **SYSTEME ZUR POSITIONSBESTIMMUNG MIT EINER ENERGIEFÜHRUNGSKETTE**
SYSTEMS FOR POSITION DETERMINATION USING AN ENERGY CHAIN
SYSTÈMES POUR LA DÉTERMINATION DE POSITION POURVUS D'UNE CHAÎNE PORTE-CÂBLES

(30) Priorität: 20.03.2019 DE 202019101608 U
(43) Veröffentlichungstag der Anmeldung: 19.01.2022
(73) Patentinhaber: Igus GmbH, 51147 Köln (DE)
(72) Erfinder: HABERING, Richard, 51143 Köln (DE); SCHMER, Konstantin, 50827 Köln (DE)
(74) Vertreter: Lippert Stachow Patentanwälte Rechtsanwälte
(86) Internationale Anmeldenummer: PCT/EP2020/057654
(87) Internationale Veröffentlichungsnummer: WO 2020/188044

(56) Entgegenhaltungen:
- DE-A1-102012 113 082
- DE-U1-202014 104 075
- DE-U1-202016 000 501
- DE-U1-202016 107 316
- DE-U1-202016 107 317
- DE-U1-202017 102 410
- DE-U1-202018 101 942

## Beschreibung

Die Erfindung betrifft allgemein ein System zur Positionsbestimmung mit einer Energieführungskette zur dynamischen Führung von Versorgungsleitungen, wie Kabel, Schläuchen oder dergleichen, siehe zum Beispiel DE202018 101942U1 und DE 202016107316U1.

Energieführungsketten sind typisch aus in Längsrichtung gelenkig verketteten Kettengliedern zusammengesetzt, die einen Aufnahmeraum für die Versorgungsleitung bereitstellen. Sie bilden beim Verfahren typisch ein erstes Trum, das endseitig an einem Anschlusspunkt festgelegt ist, und ein bewegliches zweites Trum umfasst, das endseitig an einem Mitnehmer festgelegt ist, wobei der Mitnehmer entlang einer Fahrstrecke hin- und her fahrbar bzw. beweglich ist, insbesondere linear verfahrbar. Zwischen den Trumen bildet die Energieführungskette einen mitfahrenden Umlenkbogen. Die Erfindung betrifft insbesondere ein System zur Positionsbestimmung mit einer derartigen gattungsgemäßen Energieführungskette, bei welcher mitnehmerseitig eine Sensorvorrichtung angebracht ist, welche zur Positionsbestimmung geeignet ist. Davon abgesehen kommt es vorliegend auf die Bauart der Energieführungskette bzw. Kettenglieder grundsätzlich nicht an.

WO 2014/102170 A1 beschreibt eine Energieführungskette für lange Verfahrwege mit einer Antriebseinrichtung das bewegte Trum unterstützt und durch eine Steuerungseinheit gesteuert wird, um die Belastung der Energieführungskette, insbesondere durch Zugund Schubkräfte, zu mindern. In einem Ausführungsbeispiel wird ein Wegsensor vorgeschlagen, der zur Bestimmung des Verfahrwegs mit der Steuerungseinheit verbunden ist, um die antreibende oder bremsende Wirkung der Antriebseinrichtung zu steuern. Mit dem Wegsensor wird eine Bewegung des beweglichen Anschlussbereichs ermittelt, es wird hier jedoch keine Positionsbestimmung vorgeschlagen. Grundsätzlich wäre ein derartiger Wegsensor zur Positionsbestimmung verwendbar. Mit einem abrollenden Drehgeber, wie beispielhaft in WO 2014/102170 A1 dargestellt, ist jedoch Schlupf nicht auszuschließen, sodass eine zuverlässige Positionsbestimmung kaum zu erreichen ist.

In WO 2018/115528 A1 wird gemäß einem Aspekt ein Sensormodul vorgeschlagen, das zur quantitativen Erfassung einer kinematischen Größe an einem Endbereich des beweglichen Trums oder am Mitnehmer angeordnet ist. Als Sensor wird z.B. ein 3-Achsen Beschleunigungssensor vorgeschlagen. Ein solcher Beschleunigungssensor erlaubt es, den im Betrieb zurückgelegten Fahrweg bzw. die gefahrene Strecke zu bestimmen. Ferner erlaubt ein solches Sensormodul auch eine Bestimmung der Momentanposition durch Nachhalten der Bewegung über die Zeit, z.B. geeignete Signalverarbeitung, und ist grundsätzlich wenig störanfällig.

Ein weiterer Aspekt aus WO 2018/115528 A1 (vgl. dort FIG.1A, FIG.2) nutzt verteilte Lichtschranken oder Näherungsschalter, die nur unpräzise, grobe Kenntnis der Position bzw. räumlichen Lage der Energieführungskette liefern. Entsprechendes gilt für die Anordnung mit Lichtschranken in DE 20 2018 101 942 U1 bzw. der nachveröffentlichten WO 2019/197284 A1 (dort FIG.5A).

Eine im Betrieb dauerhaft zuverlässige Positionsbestimmung des Mitnehmers bzw. der fahrenden Anschlussstelle der Maschine bzw. Anlage, ist mit beiden Ansätzen jedoch nur bedingt erzielbar.

Unter anderem bieten sie nur eine beschränkte Positionsgenauigkeit, da sich Abweichungen in der ermittelten Relativposition, z.B. durch Schlupf, bzw. relative Messfehler über die Zeit addieren. Zudem liefern die vorgenannten Ansätze im Ruhezustand bzw. bei Neu-Initialisierung keine Information über die aktuelle Absolutposition.

Eine erste Aufgabe der vorliegenden Erfindung besteht mithin darin, ein verbessertes System zur Positionsbestimmung mit einer Energieführungskette vorzuschlagen, das im Betrieb robust ist und mit möglichst geringem Aufwand am Ort der Anwendung installiert werden kann. Vorzugsweise soll es eine im Betrieb zuverlässigere und/oder genauere Bestimmung der Absolutposition ermöglichen. Unter Positionsbestimmung wird jedoch vorliegend nicht zwingend eine Messung im Sinne der Messtechnik verstanden, sondern allgemein eine quantitative Ermittlung bzw. Erfassung der Position des Mitnehmers.

Die vorgeschlagene Lösung soll vielseitig verwendbar sein und insbesondere in die Steuerung des durch die Energieführungskette versorgten, beweglichen Teils der Maschine oder Anlage (nachfolgend kurz Maschinenteil) eingebunden werden können. Das vorgeschlagene System soll insbesondere auch bestehende bzw. bekannte separate Systeme zur Positionsbestimmung ersetzen können.

Die Erfindung betrifft insbesondere eine eindimensionale d.h. 1D-Bestimmung bzw. 1D-Erfassung der Position des Mitnehmers bzw. des bewegten Maschinenteils entlang einer linearen Fahrstrecke, d.h. in Bezug auf eine gedachte Linie.

Ein erster Lösungsansatz bzw. Aspekt der Erfindung betrifft eine Energieführungskette die mit einer Führungsanordnung mit entlang der Fahrstrecke angeordneten Führungsbauteilen zur seitlichen Führung der Energieführungskette beim Verfahren ausgestattet ist. Typischerweise werden hierzu sogenannten Führungsrinnen mit gegenüberliegenden Seitenwandteilen verwendet, es kommen jedoch auch andere Bauarten in Betracht. Solche Führungsanordnungen werden bei langen Verfahrwegen, ab 5m meist über 10m eingesetzt um ungewollte Bewegungen seitwärts zu verhindern.

Erfindungsgemäß wird nach dem ersten Aspekt vorgeschlagen, dass zumindest einige der Führungsbauteile der Führungsanordnung mindestens eine aufweisen, die als Positionsreferenz für die Sensorvorrichtung dient. Somit kann die Sensorvorrichtung mit solchen einzelnen Referenzkomponenten zusammenwirken um eine vergleichsweise zuverlässige bzw. robuste Positionsbestimmung zu erzielen.

Durch die Verwendung von Referenzkomponenten kann die Auswirkung relativer Abweichungen bzw. eine Bestimmung der Relativposition auf einzelne Längsabschnitte des Verfahrweges beschränkt werden. Die Referenzkomponenten an der Führungsanordnung können somit, ähnlich Bojen, Baken bzw. Meilensteinen, zur besseren und zuverlässigeren Bestimmung der aktuellen Position, insbesondere einer Absolutposition genutzt werden.

Die Referenzkomponente kann am jeweiligen Führungsbauteil entweder als separate Komponente befestigt sein, ggf. auch lösbar zu Wartungszwecken, oder als integraler Bestandteil des Führungsbauteils mit diesem hergestellt sein. In beiden Fällen sind die Referenzkomponenten am jeweiligen Führungsbauteil ortsfest vorgesehen.

Ausgehend von einer bekannten und im Raum bezüglich der tragenden Struktur festgelegten Position der Bauteile der Führungsanordnung, z.B. der einzelnen Seitenwandteile oder Bodenführungselemente, ist inhärent auch die Lage und Position der daran vorgesehenen Referenzkomponenten fest vorgegeben und als Absolutposition vorbestimmt bzw. bestimmbar.

Ein zweiter Lösungsansatz bzw. zweiter Aspekt kann auch bei Energieführungsketten ohne zusätzliche Führungsanordnung eingesetzt werden.

Erfindungsgemäß wird nach dem zweiten Aspekt vorgeschlagen, dass zusätzlich zur mitnehmerseitigen Sensorvorrichtung eine weitere, zweite Sensorvorrichtung zur Positionsbestimmung ortsfest am stationären Anschlusspunkt angebracht ist und dass zumindest jedes n-te Kettenglied mindestens eine Referenzkomponente aufweist, die am Kettenglied angebracht bzw. befestigt ist oder mit diesem integral hergestellt ist. Hierdurch kann abhängig von der Fahrstellung des Mitnehmers bzw. bewegten Trums entlang der Fahrstrecke, entweder die erste Sensorvorrichtung oder die zweite Sensorvorrichtung mit den einzelnen Referenzkomponenten der Kettenglieder zusammenwirken und eine vergleichsweise zuverlässige bzw. robuste Bestimmung der Position, insbesondere des Mitnehmers, oder ggf. auch der Energieführungskette insgesamt, erzielen. In diesem Fall kann die Energieführungskette selbst als Maßverkörperung bzw. eine Art Maßband dienen und die Position als Position relativ zur aktuellen Lage der Energieführungskette erfasst werden.

Beide Ansätze können als Lösungen zur Positionsbestimmung bzw. - Ermittlung oder Positionsüberwachung des bewegten Teils der Anlage/Maschine die von der Energiekette versorgt wird genutzt werden. Zusätzlicher Installationsaufwand - insbesondere im Vergleich zu einem eigens vorgesehenen herkömmlichen Positionssystem - entfällt mit beiden vorgenannten Konzepten weitestgehend, da die Referenzkomponenten zusammen mit der bestimmungsgemäß vorgesehenen Energieführungskette bzw. deren Führungsanordnung installiert werden.

Der erste Ansatz erlaubt über die Lebensdauer eine insgesamt genauere Bestimmung, insbesondere auch unmittelbar zur Absolutposition und auch bei sehr langen Verfahrwegen.

Der zweite Ansatz erlaubt zunächst eine Bestimmung der Relativposition in Bezug auf die Kettenglieder d.h. die Länge der Kette. Hieraus lässt sich jedoch auch, wegen bekannter Kettenlänge und Nominalverlauf, eine Information über die aktuelle Relativposition oder auch Absolutposition des Mitnehmers ermitteln. In diesem Ansatz kann ggf. ein vorhandenes Bauteil des Kettenglieds, z.B. ein Quersteg als Referenzkomponente verwendet werden, ggf. auch ohne zusätzliche Gestaltungsmerkmale, da dessen Position am Kettenglied konstruktiv vorbestimmt ist.

Beide Ansätze erlauben eine Zusammenwirkung der Referenzkomponenten mit der Sensorvorrichtung im ruhenden Zustand, d.h. bei Stillstand, und beim Fahren der Energieführungskette entlang der Fahrstrecke. Beide lassen sich mit vergleichsweise wenig Aufwand robust gestalten. Beide bieten gegenüber konventionellen Spezialsystemen zur Positionsmessung erhebliche Installationseinsparungen, da das System inhärent zusammen mit der Energieführungskette bzw. deren Führungsanordnung montierbar ist. Zudem sind beide Ansätze besonders vorteilhaft bei langen Verfahrwegen, d.h. Systemen großer Länge, z.B. >10m.

Die vorzugsweise lineare Fahrstrecke kann horizontal verlaufen und eine Gesamtlänge von mindestens 5m, typisch >>10m, und bis hin zu >100m Metern haben. Je länger die Fahrstrecke des bewegten Maschinenteils desto mehr Einsparung an Installationsaufwand bietet die Erfindung, insbesondere im Vergleich zu bekannten Positionssystemen, wie bspw. einem System zur Erfassung der laufenden Absolutposition einer Krankatze (Engl. crane trolley), wie z.B. bei Containerbrücken typisch.

In bevorzugter Ausführungsform wirkt die Sensorvorrichtung mit den einzelnen Referenzkomponenten berührungslos zusammen, sodass keine Verschleißerscheinungen eintreten bzw. hohe Lebensdauer erzielbar ist. Dies kann insbesondere durch elektromagnetische Sensorik erreicht werden, vorzugsweise per Funk, oder durch optische Sensorik. Auch akustische Sensorik, vorzugsweise per Ultraschall, ist denkbar. Grundsätzlich kann jede Art der Wellenübertragung im freien Raum zwischen Sensorvorrichtung und einzelnen Referenzkomponenten verwendet werden, die eine Entfernungsbestimmung bzw. Abstandsmessung ermöglicht.

Die Referenzkomponenten können an der Führungsanordnung bzw. den Kettengliedern in vorbestimmten, insbesondere gleichmäßigen Abständen, in Bezug auf die Längsrichtung der Fahrstrecke angeordnet sein, sodass jede Referenzposition eine unmittelbare Aussage über den Abstand zum Start- oder Endpunkt der Fahrstrecke liefert.

Ungeachtet der Anordnung ist es für eine zuverlässige Bestimmung einer Absolutposition vorteilhaft, wenn jede Referenzkomponente eine eindeutige Kennung aufweist, welcher eine Position, insbesondere eine anwendungsabhängige Absolutposition, entlang der Fahrstrecke zuordenbar ist, z.B. in Rahmen einer Referenzier-Fahrt bzw. beim Initialisieren und Anlernen des Systems.

Für Anwendungen im freien vorteilhaft und hinsichtlich Witterungseinflüsse möglichst wenig anfällig ist eine funkbasierte Positionsbestimmung. Dabei kann die Referenzkomponente als sendefähige Funkschaltung ausgeführt sein und die Sensorvorrichtung einen entsprechenden Empfänger aufweisen. Grundsätzlich wäre auch eine umgekehrte Anordnung im Rahmen der Erfindung, jedoch mit höherem Verkabelungs- bzw. Signalübertragungsaufwand verbunden.

Funksignale bieten drei grundlegende Eigenschaften, die eine Entfernungsmessung ermöglichen, nämlich Signalstärke, Laufzeit und Einfallsrichtung. In den bevorzugten Ausführungsformen erfolgt bevorzugt eine Lateration bzw. eindimensionale Bestimmung und daher werden als Methoden der Entfernungsmessung bevorzugt solche eingesetzt die auf Laufzeit (Engl. time-of-flight: TOF) und/oder Empfangssignalstärke (Engl. received signal strength: RSS) beruhen, d.h. einer dieser Eigenschaften:
i) Laufzeit (TOF): Der Abstand zwischen Sender und Empfänger entspricht der elektromagnetischen Laufzeit des übertragenen Signals. Die Entfernung kann aus der Messung der Ankunftszeit (Engl. time-of-arrival: TOA) eines Signals an einem Empfänger bei bekannter Übertragungszeit (Startzeit) oder aus der Differenz der Empfangszeit an verschiedenen Orten (Zeitdifferenz der Ankunft) bestimmt werden. Als Ausdruck der Laufzeit kann die Phase des empfangenen Signals bzw. Ankunftsphase (POA) betrachtet werden; und/oder
ii) Empfangssignalstärke (RSS). Die Leistungsdichte einer elektromagnetischen Welle ist umgekehrt proportional zum Quadrat der Entfernung zur Quelle. Bei bekannter bzw. vorgegebener Sendeleistung ist eine Schätzung der Entfernung aus Signalstärkemessungen möglich.

Bei eindimensionaler Entfernungsbestimmung kann eine einfache Lateration erfolgen, es ist bei Kenntnis vorangegangener Position(en) nicht erforderlich, mehrere Referenzkomponenten zu empfangen um die Position entlang der Fahrstrecke zu bestimmen.

Auf die Implementierung bzw. Messtechnik im Einzelnen kommt es für die Erfindung nicht an, es kann jede geeignete dem Fachmann bekannte Technik eingesetzt werden. Bezüglich funkbasierter Entfernungsmessung wird auf die Lehre aus dem Fachbuch: Bensky, Alan. (2016) "Wireless Positioning Technologies and Applications" (2. Auflage; Verlag: Artech House Publishers; ISBN-10: 1608079511) Bezug genommen. Eine geeignete funkbasierte Messtechnik wird z.B. von der Fa. BTG Positioning Systems (NL-3261 LB, Netherlands) unter der Bezeichnung "RFM1.2" angeboten.

Für eine energiesparsame Lösung mit wenig Verkabelungsaufwand kann eine Funkbasierte Referenzkomponente bzw. Funkkomponente in Form einer passiven Funkschaltung, vorzugsweise eines passiven Transponders, insbesondere RFID-Transponders, verwendet werden. Solche Funkschaltungen können insbesondere aus der Funkleistung des abfragenden Senders der Sensorvorrichtung gespeist werden und benötigten in diesem Fall keine eigene Energieversorgung, d.h. auch keine Versorgungsleitung.

Alternativ können die Referenzkomponente auch als aktive Funkschaltungen, insbesondere leitungsgebundene Funkschaltungen ausgeführt sein. Dies erleichtert beispielsweise die Synchronisation aller Referenzkomponente mit einer Systemzeit zum Versenden von Zeitstempeln für eine Laufzeitmessung in der Sensorvorrichtung. ist

Die Sensorvorrichtung kann für passive Funkreferenzen als Sender-/Empfänger, z.B. analog einem RFID-Lesegerät, oder für aktive Funkreferenzen auch als reiner Empfänger ausgeführt sein, wenn z.B. die aktiven Funkreferenzen ohne Abfragen selbsttätig Funksignale absenden, z.B. mit Sendezeit-Stempel und/oder Kennung der Referenzkomponente.

Bei aktiven oder passiven Funkkomponenten als Positionsreferenz hat jede, Sensoreinrichtung eine für die verwendete Funktechnik passende Antennenanordnung. Diese ist vorzugsweise so dimensioniert, dass in jeder Fahrstellung entlang der Fahrstrecke mindestens eine Funkkomponente im wirksamen Empfangsbereich der Antennenanordnung liegt.

Die verwendeten Funkkomponenten arbeiten vorzugsweise in einem IFM-Frequenzband. Es kann jede gängige Funktechnologie verwendet werden, z.B. eine WLAN/Wi-Fi Technik nach IEEE 802.11 Protokollfamilie, besonders geeignet für Messung der Ankunftszeit (TOA) oder auch Bluetooth und ZigBee nach IEEE 802.15 Protokollfamilie, besonders für Empfangssignalstärkemessungen (RSS). Bevorzugt wird jedoch eine energiesparende Lösung, wie z. B. RFID oder Bluetooth Low Energy (BLE) eingesetzt. Bereits ohne Zusatz-Maßnahme können mit reinen Funk-Referenzkomponenten bereits Präzision im Zentimeterbereich erzielt werden.

Alternativ oder ergänzend zur Funktechnik können Referenzen auch optisch und/oder elektromagnetisch, z.B. induktiv oder kapazitiv, lesbare Markierung, insbesondere als codierte Markierung bzw. Code-Markierung, z.B. in Barcode-Struktur, ausgeführt sein. Solche Markierungen dienen vorzugsweise als Maßverkörperung und können mittels eines optischen und/oder elektromagnetischen Sensors der Sensorvorrichtung erfasst werden, z.B. berührungslos abgetastet werden. Auf Ablesen oder Abtasten von Markierungen, z.B. einer Markierungsspur, beruhende Erfassung ist sehr robust und kann hohe Präzision bieten, insbesondere bei photoelektrischer Abtastung mit Photodetektoren bzw. Lichtsensoren, optischen Detektoren, optoelektronischen Sensoren oder dgl. Als codierte Markierung kommt beispielsweise eine Weg-Codier-System mit Codeschiene mit optischer Abtastung in Betracht, wie bspw. unter der Bezeichnung "WCS" von der Fa. Pepperl+Fuchs (DE-68307 Mannheim, Deutschland) erhältlich. Bevorzugt ist dabei eine Codespur nach dem Prinzip einer derartigen Codeschiene als integraler Bestandteil durch Aussparungen in das Seitenwandteil der Führungsrinne eingearbeitet, z.B. durch entsprechende Nachbearbeitung. Auch ein einfacher Lochstreifen bzw. eine Lochspur ohne Codierung, z.B. mit gleichbleibenden Lochabständen, erlaubt jedoch bereits eine relativ präzise absolute Positionsbestimmung und lässt sich einfacher herstellen.

Es kann auch ergänzend für die Wegstrecke zwischen zwei Funk-Referenzkomponenten eine zusätzliche Relativ-Messung per Inkrementalgeber oder Absolutgeber vorgesehen werden um eine noch präzisere Positionsbestimmung zu erzielen und zugleich Relativmessfehler durch Referenzieren zu mindernd. Markierungen können gegenüber elektromagnetischen Störungen unempfindlicher sein und ggf. - wie Funklösungen - auch in widrigen Umgebungsbedingungen eingesetzt werden.

In bevorzugter Ausführungsform des ersten Aspekts mit Führungsanordnung ist diese als Führungsrinne ausgeführt, welche Seitenwandteile umfasst. Solche welche Seitenwandteile werden in Längsrichtung an beiden Seiten entlang der Fahrstrecke durchgehend aufeinanderfolgend ortsfest angeordnet. Zwei gegenüberliegende Seitenwandteile bilden dabei jeweils einen Abschnitt der Führungsrinne. Somit ist vorzugsweise an zumindest jedem n-ten Seitenwandteil, insbesondere an jedem Seitenwandteil, einer Seite der Führungsrinne jeweils mindestens eine Referenzkomponente vorgesehen. Die auf der anwendungsabhängigen Tragstruktur fest montierten Seitenwandteile können somit genutzt werden als Träger für die Referenzkomponenten, sodass diese inhärent mit den Seitenwandteilen in einem Schritt montiert werden.

Grundsätzlich sind die Referenzkomponenten vorzugsweise in vorgegebenen, regelmäßigen Abständen entlang der Fahrstrecke verteilt an der Führungsanordnung befestigt.

Wenn die Führungsanordnung als Führungsrinne aus in Längsrichtung zusammengesetzten, vorzugsweise an sich baugleichen Seitenwandteilen aufgebaut ist, wird in der Herstellung der Seitenwandteile vorzugsweise an jedem Seitenwandteil mindestens eine Referenzkomponente vorgesehen, z.B. eine Markierung eingearbeitet, bzw. befestigt, z.B. eine Funkkomponente angebracht.

In einer Ausführungsform kann dabei zusätzlich zu einer Markierung am Seitenwandteil eine weitere Referenzkomponente in Form einer Funkkomponente am Seitenwandteil vorgesehen sein. Dann kann die Sensorvorrichtung insbesondere einen Inkrementalgeber, welcher mit der Markierungsspur abtastend zusammenwirkt, z.B. optisch abtastend, und eine Antennenanordnung umfassen, welche eine Kennung der Funkkomponente ausliest, um absolute Positionsinformation zu gewinnen.

Die Seitenwandteile sind vorzugsweise als Metallprofile, insbesondere Aluminium-Profile oder Stahlblech-Profile, mit baugleicher Grundform und einem Querschnittsprofil mit Befestigungsfunktionen ausgeführt. Auch Seitenwandteile aus Kunststoff sind denkbar. Eine Markierung als Referenzkomponente wird bevorzugt an der oberen Hälfte des Seitenwandteils, insbesondere als von außen erfassbare Markierungsspur, vorgesehen, z.B. als Code-Spur in Art einer Barcode-Struktur. Eine solche kann z.B. durch Aussparung im Profilmaterial (spanabhebende Bearbeitung), Farbauftrag, Laserdrucken oder dgl. am Seitenwandteil vorgesehen oder in diese eingearbeitet werden. Auch das Anbringen einer separat gefertigten Code-Spur liegt im Rahmen der Erfindung.

Die Erfindung betrifft demnach auch Seitenwandteil einer Führungsrinne für eine Energieführungskette, welches sich dadurch auszeichnet, dass am Seitenwandteil mindestens eine ortsfeste Referenzkomponente vorgesehen ist, insbesondere eine Funkkomponente oder eine optisch und/oder elektromagnetisch erfassbare Markierung, welche ausgeführt ist um als Positionsreferenz mit einer Sensorvorrichtung zur Positionsbestimmung zusammenzuwirken.

Alternativ zu Führungsrinnen mit Seitenwandteilen kommen auch Führungsanordnungen in Betracht, die als Führungsbauteile entlang der Fahrstrecke in vorgegebenen Abständen zueinander verteilt befestigte Bodenführungselemente aufweisen, d.h. keine durchgehenden Seitenwände für beide Trume. Derartige Führungen werden unter der Handelsbezeichnung "Autoglide" oder "Guidelite" von der Anmelderin (igus GmbH - D-51147 Köln) angeboten. Auch bei einer solchen verteilten Führungsanordnung kann zumindest jedes n-te Bodenführungselement, insbesondere jedes Bodenführungselement zu einer Seite, eine Referenzkomponente, vorzugsweise eine Funkkomponente, umfassen.

Wenn keine Führungsanordnung vorliegt kann nach dem zweiten Aspekt jede Referenzkomponente an einem Kettenglied der Energiekette angebracht sein. In einer Ausführungsform hierzu kann die Referenzkomponente einen Quersteg eines Kettenglieds umfassen bzw. an einem Quersteg eines Kettenglieds angebracht oder in diesen integriert sein. Auch in diesem Fall kann die Referenzkomponente eine optisch und/oder elektromagnetisch erfassbare Markierung, insbesondere Code-Markierung, oder als Funkkomponente, vorzugsweise passive Funkkomponente ausgeführt sein.

Das vorgeschlagene System zur Positionsbestimmung kann insbesondere von der Steuerung der durch die Energiekette versorgten Maschine bzw. Anlage genutzt werden. Somit ist vorzugsweise eine Anlagensteuerung zur Steuerung der Bewegung eines beweglichen Maschinenteils vorgesehen, welcher den Mitnehmer umfasst wobei diese Steuerung zur Positionsbestimmung des beweglichen Maschinenteils signaltechnisch mit der Sensorvorrichtung des Systems verbunden ist.

Die Erfindung eignet sich nicht nur aber insbesondere auch zur Anwendung in einem Kran, insbesondere einem Portalkran oder Brückenkran, bei welchem eine Krankatze mit relativ langem linearen Verfahrweg eingesetzt wird, wie z.B. an einer Containerbrücke oder dgl. Dabei wird die Krankatze mitnehmerseitig typisch mit einer Energieführungskette verbunden, z.B. zur Stromversorgung und Antriebssteuerung eines Containergeschirrs, und der Kran hat eine Steuerung, welche signaltechnisch mit der Sensorvorrichtung verbunden ist und die Position der Krankatze anhand der erfindungsgemäßen Positionsbestimmung ermittelt bzw. überwacht und ggf. deren Bewegung darauf beruhend steuert.

Das vorgeschlagene System zur Positionsbestimmung kann besonders bevorzugt in Kombination mit einem Kraftmesssystem zur positionsabhängigen Kraftmessung an der Energieführungskette eingesetzt werden. Solche Kraftmesssysteme hat die Anmelderin in WO 2004/090375 A1 oder in WO 2013/156607 A1 beschrieben. Bei sehr langen Verfahrwegen, bspw. > 100m, ist es notwendig, die zur Erkennung eines Fehlerfalls bzw. Sicherheitsabschaltung definierten Schub-/Zugkraftgrenzen abhängig von der Momentanposition der Energieführungskette zu definieren, da die notwendigen Anfahrkräfte in der voll ausgefahrenen Endstellung, wegen dem zu bewegenden fast vollständig aufliegenden Trum, deutlich höher sind als in der anderen Endstellung, vgl.

WO 2004/090375 A1. Demnach kann mit dem vorgeschlagene System zur Positionsbestimmung in Kombination mit einem Kraftmesssysteme, z.B. gemäß WO 2004/090375 A1 oder WO 2013/156607 A1, deren Lehren insoweit hier einbezogen werden ein robustes integriertes System angeboten werden, bei dem es nicht erforderlich ist eine Positionsinformation aus der Steuerung der versorgten Anlage oder Maschine zu gewinnen. Gegebenenfalls kann dabei auch das System zur Positionsbestimmung von der Anlagen- bzw. Maschinensteuerung (z.B. eines Krans) als Quelle für die Positionsinformation zum bewegten Teil genutzt werden.

Das vorgeschlagene System, insbesondere nach dem ersten Aspekt, kann auch hohe Präzision der Positionsbestimmung erreichen und demnach verwendet werden zur kontinuierlichen absoluten Positionsmessung eines von der Energieführungskette versorgten fahrbaren Maschinen- oder Anlagenteils, z.B. einer linear verfahrbaren Krankatze.

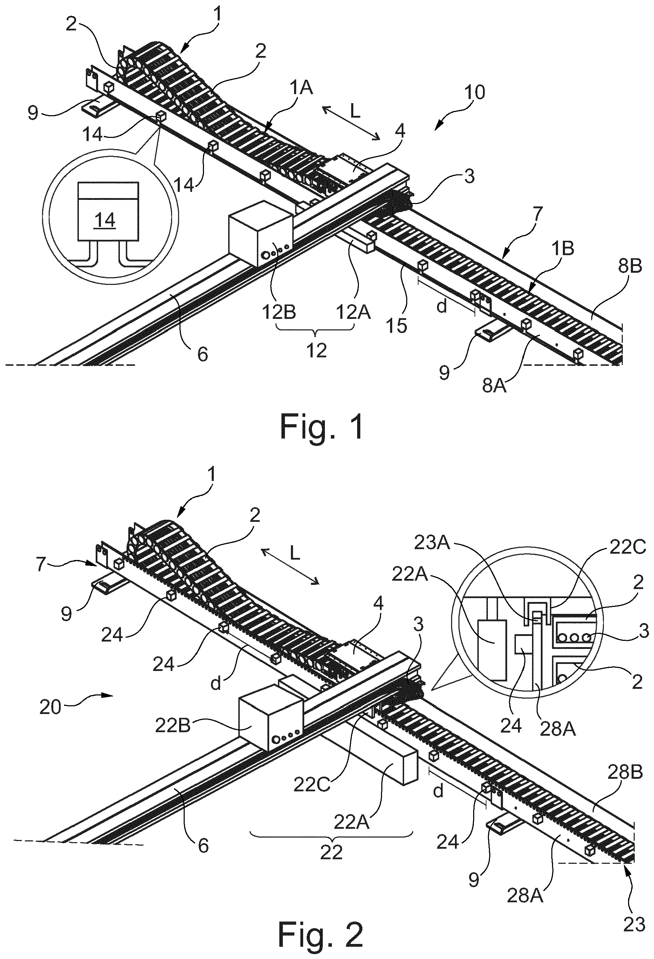

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen
**FIG.1****:** ein Prinzipschema in Perspektivansicht eines ersten, bevorzugten Ausführungsbeispiels zur funkbasierten Positionsbestimmung mit einer in einer Führungsrinne geführten Energieführungskette für besonders lange Verfahrwege, wobei nur ein Teilabschnitt dargestellt ist;
**FIG.2****:** ein Prinzipschema in Perspektivansicht eines zweiten Ausführungsbeispiels zur kombinierten funkbasierten und optischen Positionsbestimmung, wobei nur ein Teilabschnitt dargestellt ist;

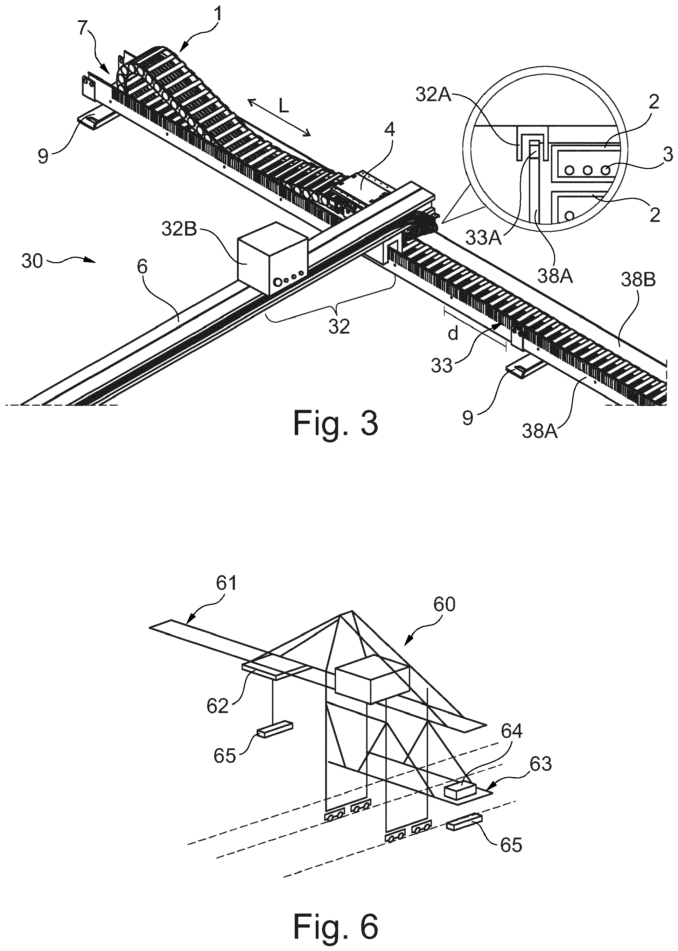

**FIG.3****:** ein Prinzipschema in Perspektivansicht eines dritten Ausführungsbeispiels zur optischen Positionsbestimmung, wobei nur ein Teilabschnitt dargestellt ist;

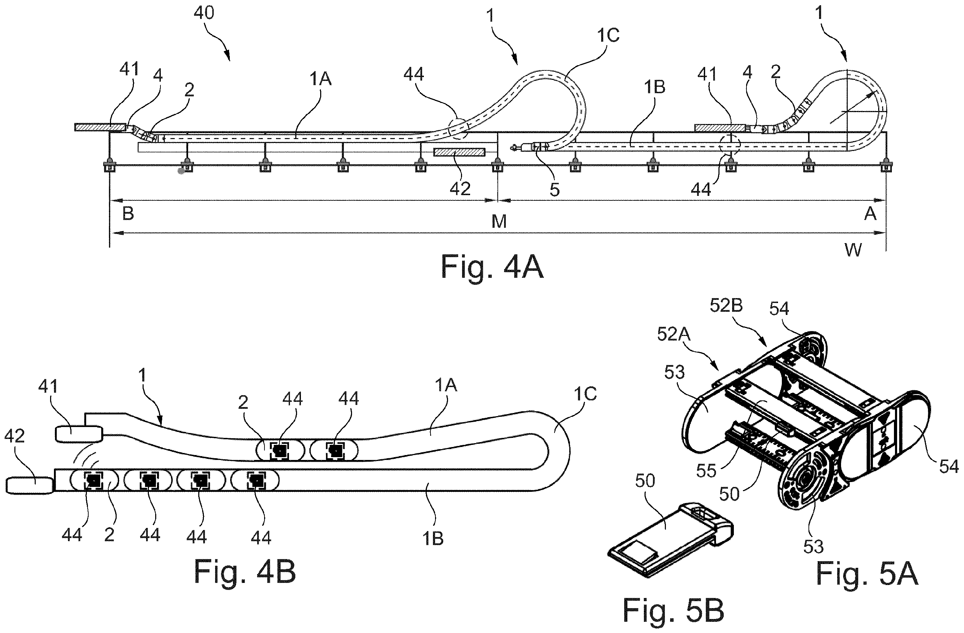

**FIG.4A-4B****:** schematische Seitenansichten eines Ausführungsbeispiels zur Positionsbestimmung anhand einer Energieführungskette, das auch für Anwendungen ohne Führungsrinne geeignet ist;
**FIG.5A-5B****:** Kettenglieder (FIG.5A) einer beispielhaften Energieführungskette und ein Funkmodul als Referenzkomponente (FIG.5B) zum Nachrüsten eines Querstegs eines Kettenglieds; und
**FIG.6****:** einen Portalkran bzw. eine Containerbrücke als Anwendungsbeispiel eines Systems nach FIG.1-3.

FIG.1 zeigt eine Energieführungskette 1 (hiernach kurz "Energiekette") aus gelenkig miteinander verbundenen Kettengliedern 2 zur dynamischen, geschützten Führung von Leitungen 3 entlang eines Verfahrwegs. Ein Ende der Energiekette 1 ist an einem Mitnehmer 4 festgelegt, das andere Ende an einer stationären Anschlussstelle 5 (FIG. 4A). Am Mitnehmer 4 treten die Leitungen 3, z.B. Stromversorgung- und Steuerleitungen, aus der Energiekette 1 aus und gehen zu einem beweglichen Verbraucher, hier nur in Form eines Trägerelements 6 ganz schematisch dargestellt. Die Energiekette 1 in FIG.1 ist speziell für lange Verfahrwege ausgeführt, mit einem Obertrum 1A, das auf dem Untertrum 1B abgleitet oder abrollt. Die Energiekette 1 fährt im Betrieb linear entlang einer geraden Längsrichtung L, hier z.B. horizontal.

Die Energiekette 1 ist dazu in einer Führungsrinne 7 seitlich geführt, wobei sich die Führungsrinne 7 über die Gesamtlänge W (FIG. 4A) des Verfahrwegs der Energiekette 1 linear in Längsrichtung L erstreckt und hier nur über einen Abschnitt gezeigt ist. Die Führungsrinne 7 ist aus jeweils gegenüberliegenden, einzelnen Seitenwandteilen 8A, 8B aufgebaut, die über Montageprofile 9 miteinander und auf einer tragenden Struktur befestigt sind. Als Seitenwandteile 8A, 8B kommen in FIG.1 insbesondere baugleiche Profilteile aus Aluminium oder Stahl in herkömmlicher Bauweise und vorgegebener Länge (z.B. 2m) in Betracht. An beiden Seiten der Führungsrinne 7 können im System 10 nach FIG.1 baugleiche Seitenwandteile 8A, 8B verwendet werden. Die Seitenwandteile 8A, 8B sind in Längsrichtung L lückenlos aufeinanderfolgend miteinander verbunden bzw. auf einer Tragstruktur (nicht gezeigt) ortsfest befestigt, z.B. mittels der Montageprofile 9. Somit folgen an jeder Seite der Führungsrinne 7 jeweils einzelne Seitenwandteile 8A, 8B entsprechend der linearen Fahrrichtung der Energiekette 1 bzw. des Mitnehmers 4 unmittelbar aufeinander. Die einzelnen Seitenwandteile 8A, 8B haben eine vordefinierte Montageposition, d.h. fest vorgegebene Position an der Anlage/Maschine.

FIG.1 zeigt weiterhin ein besonders bevorzugtes System 10 zur Positionsbestimmung des Mitnehmers 4 bzw. des fest mit diesem verbundenen beweglichen Teils 6 der Anlage bzw. Maschine. Das System 10 umfasst eine Sensorvorrichtung 12, die in FIG.1 im Wesentlichen aus einer Antennenvorrichtung 12A mit einer Funkantenne und einer rechnergestützten Auswertungseinheit 12B besteht. Die Auswertungseinheit 12B ist signaltechnisch mit der Antennenvorrichtung 12A verbunden und u.a. zur Auswertung von Funksignalen konfiguriert. Die Antennenvorrichtung 12A kann zum Empfangen und/oder Senden von Funksignalen ausgelegt sein, in FIG.1 primär zum Empfangen. Das System 10 umfasst weiterhin eine Vielzahl einzelner funkbasierter Referenzkomponenten 14, welche mit der Sensorvorrichtung 12 zur Positionsbestimmung zusammenwirken. Die funkfähigen Referenzkomponenten 14 sind dabei als separate Bauteile in fest vorgegebenen Abständen d an einer Seite der Führungsrinne 7 vorgesehen. In FIG.1 sind jeweils mehrere Referenzkomponenten 14 an einem zugeordneten Seitenwandteil 8A als separate Komponenten befestigt. Dabei sind Referenzkomponenten 14 über die Gesamtlänge W des Verfahrwegs W (FIG. 4A) an der Führungsrinne 7 vorgesehen, mit gleichbleibendem Abstand d zueinander verteilt. Somit ist die Position der einzelnen Referenzkomponenten 14 nach Montage der Führungsrinne 7 ebenfalls vorbestimmt.

In FIG.1 sind die Referenzkomponenten 14 des Positionssystems 10 kabelgebunden und miteinander verbunden, nämlich über eine geeignete Busleitung zur Stromversorgung und zum Datenaustausch. Über die Busleitung 15 kann insbesondere eine Zeiteinheit, die in den einzelnen Referenzkomponenten 14 vorgehalten ist, für alle Referenzkomponenten 14 auf eine aktuelle Systemzeit der Sensorvorrichtung 12 synchronisiert werden. Wie FIG.1 weiter andeutet, ist die Antennenvorrichtung 12A so dimensioniert, dass stets mindestens eine Referenzkomponente 14, vorzugsweise mindestens zwei Referenzkomponenten 14, im Empfangsbereich der Antennenvorrichtung 12A liegen. Zur Positionsbestimmung sendet jede Referenzkomponente 14 ein Funksignal, welches eine eindeutige Kennung, z.B. Adresse, der jeweiligen Referenzkomponente 14 und einen Zeitstempel entsprechend dem ausgehenden Sendezeitpunkt des Funksignals. Hierauf beruhend kann die Auswerteeinheit 12B, über entsprechende Funksignale die von der Antennenvorrichtung 12A empfangen werden, eine präzise Messung bzw. Berechnung Laufzeit (TOF) vornehmen, insbesondere durch Vergleich des Sende-Zeitstempels der Referenzkomponente 14 mit einem Empfangs-Zeitstempel des entsprechenden Funksignals. Beruhend auf einer entsprechenden TOF-Messung lässt sich präzise die eindimensionalen Position der Sensorvorrichtung 12 in Bezug auf die vorbekannte Position der betrachteten Referenzkomponente 14 und damit des Mitnehmers 4 entlang der Längsrichtung L bestimmen. Durch Auswerten von Laufzeiten (TOF) mehrerer Referenzkomponenten 14 im Empfangsbereich der Antennenvorrichtung 12A kann die Präzision rechentechnisch erhöht werden. Alternativ oder ergänzend zu TOF-Messungen kann auch eine quantitative Entfernungsbestimmung ausgehend von Funksignalstärken nach dem RSS-Messprinzip erfolgen.

In FIG.1 sind somit die Referenzkomponenten 14 als aktive Funkschaltungen ausgeführt, z.B. ZigBee-Module, deren vorbestimmte Position über die eindeutige Kennung z.B. im Rahmen der Initialisierung oder bei einer Referenzier-Fahrt von der Auswertungseinheit 12B angelernt wird. Das vorgeschlagene Positionssystem 10 lässt sich mit nur geringem Mehraufwand im Vergleich zu einer konventionellen Energiekette 1 mit Führungsrinne 7 (ohne Positionssystem) betriebsbereit installieren. Hierzu können die Referenzkomponenten 14 insbesondere bereits ab Werk an den einzelnen Seitenwandteilen 8A befestigt sein, z.B. an hierfür eigens vorgefertigten Aufnahmen an der Außenwand des Seitenwandteils 8A, welche zugleich den gewünschten vordefinierten gleichbleibenden Intervallabstand D gewährleisten. Vor Ort lässt sich eine Verkabelung der Referenzkomponenten 14 mit der Busleitung 15 durch gängige Industriesteckverbinder leicht, schnell und zuverlässig realisieren. Die Sensorvorrichtung 12 wiederum kann ortsfest und vorgefertigt am Mitnehmer 4 befestigt und betriebsbereit mit diesem ausgeliefert werden (hier nicht gezeigt). Die Auswerteeinheit 12B kann weiterhin konfiguriert sein um mit einem oder mehreren Kraftsensoren am Mitnehmer 4 zur Messung von Zug-und Schubkräften an der Energiekette 1 verbunden sein, vgl. WO 2013/156607 A1, um eine positionsabhängige Kraftmessung zu verwirklichen. Weiterhin kann die Auswertungseinheit 12B gewonnene Positionsinformationen laufend an eine Steuerung (nicht gezeigt) der versorgten Maschine/Anlage übermitteln, so dass sich ein herkömmliches, separates Positionssystem erübrigt.

FIG.2 zeigt ein alternatives System 20 zur Positionsbestimmung, nach einem kombiniert optischen und funkbasierten Prinzip. An einer Seite der Führungsrinne 7 sind in FIG.2 als Referenzkomponenten in vorgegebenem Abstand d zueinander passive Funkschaltungen bzw. Funkkomponenten 24 vorgesehen. Die Funkkomponenten 24 sind als separate Bauteile an den einzelnen Seitenwandteilen 28A montiert. Die Funkkomponenten 24 dienen als grobe Positionsreferenz und werden anhand einer Antennenvorrichtung 22A, die ortsfest am Mitnehmer 4 befestigt ist und mit diesem mitfährt, über Funk abgefragt. Als Funkkomponenten 24 können z.B. passive COTS-RFID-Transponder verwendet werden, die typisch eine eindeutige Kennung zurücksenden und durch das Funkfeld einer als RFID-Lesegerät konfigurierten bzw. als Sender/Empfänger ausgeführten Antennenvorrichtung 22A gespeist werden. Mit der Antennenvorrichtung 22A empfangene Funksignale werden auch im System 20 durch eine Auswertungseinheit 22B ausgewertet, hier jedoch um grobe, absolute Positionsinformation ausgehend von einer vorbekannten, eingelernten Zuordnung der einzelnen Kennungen der Funkkomponenten 24 entlang der Längsrichtung L zu gewinnen. Genauere Positionsinformation wird in FIG.2 mit der Sensorvorrichtung 22 durch Kombination mit einem elektrooptischen Inkrementalgeber-Prinzip ermittelt. Hierzu ist ein optischer Abtastkopf 22C, beispielsweise mit Lichtquelle und Lichtsensor, mit der Auswertungseinheit 22B verbunden. Der Abtastkopf 22C übergreift das obere Ende der Seitenwandteile 28A beim Verfahren in Längsrichtung L. Dabei wirkt der Abtastkopf 22C optisch mit einer Lochspur 23 zusammen. Die Lochspur 23 ist am oberen Ende jedes Seitenwandteile 28A einer Seite der Führungsinne 7 eingearbeitet, d.h. diese Seitenwandteile 28A sind Sonderanfertigungen (die anderen Seitenwände 28B sind hingegen herkömmliche Profile). Die Lochspur 23 wird von durchgehenden Löchern 23A in den Seitenwandteilen 28A gebildet, die entlang einer Linie parallel zur Längsrichtung L vorgesehen sind. Die Löcher 23A haben dabei zur vereinfachten Herstellung zueinander vorzugsweise gleichbleibenden Rasterabstand, wobei durch Änderungen in Abstand oder Querschnitt jedoch auch Absolute Positionsinformation zugeordnet werden kann. Die Lochspur 23 ist in jedem Seitenwandteil 28A identisch vorgefertigt, beispielsweise durch Stanzen des Profilteils oder dgl. Anstelle von Löchern 23A können natürlich auch Schlitze oder sonstige Durchbrüche vorgesehen sein.

Der Abtastkopf 22C kann in FIG.2 nach dem abbildenden Meßprinzip arbeiten d.h. eine fotoelektrische Abtastung während der Bewegung in Längsrichtung L an der Lochspur 23 durchführen. Nach dem Prinzip eines Inkrementalgebers hat der Abtastkopf 22C hierzu bspw. eine Lichtquelle und einen gegenüberliegenden Fotodetektor, vorzugsweise eine Doppelanordnung mit zwei in Längsrichtung L entsprechend dem halben Rastermaß der Löcher 23A versetzten Paaren aus Lichtquelle und Fotodetektor. Die Seitenwandteil 28A, insbesondere die darin vorgefertigte Lochspur 23, bildet hierbei entlang der gesamten Fahrstrecke W eine Maßverkörperung für den Abtastkopf 22C zwecks Längen- und/oder Geschwindigkeitsmessung. Durch geeignete Signalauswertung in der Auswertungseinheit 22 B lässt sich anhand der Impulse des Abtastkopfs 22C beispielsweise die Fahrgeschwindigkeit des Mitnehmers 4 in Längsrichtung L relativ präzise bestimmen. Durch rechentechnische Signalverarbeitung lässt sich daraus wiederum eine genauere Bestimmung der Absolutposition erzielen, insbesondere in Verbindung mit relativ grober Positionsinformation, die parallel anhand der Funkkomponenten 24 und der Antennenvorrichtung 22A gewonnen wird. Die kombinierte Sensorik des Systems 20 ist insbesondere dann vorteilhaft, wenn, wie bei passiven Funkkomponenten 24 ohne Energieversorgung üblich, geringe Datenraten keine präzise Laufzeitmessung erlauben oder aber eine Synchronisierung nicht möglich ist.

FIG.3 zeigt ein weiteres Positionssystem 30, das jedoch mit einem rein optischen Wirkprinzip arbeitet und dennoch relativ präzise absolute Positionsinformation liefert. Hierbei umfasst die Sensorvorrichtung 32 nur einen optischen bzw. elektrooptischen Abtastkopf 32A, der signaltechnisch mit einer Auswertungseinheit 32B verbunden ist. Zur Positionsbestimmung ist beim System 30 an einer Seite der Führungsrinne 7 an jedem Seitenwandteil 38A, d.h. entlang der gesamten Länge W der Fahrstrecke, jeweils am oberen Ende eine Code-Spur 33 aus einzelnen Schlitzen 33A im Seitenwandteil 38A vorgesehen. Die Abmessung der Schlitze 33A in Längsrichtung L ist entsprechend einer vorbestimmten Kodierung jeweils unterschiedlich. Dabei kann die Code-Spur 33 in allen Seitenwandteilen 38A vorzugsweise unterschiedlich kodiert sein, so dass über den Gesamtweg W eine exakte, absolute Position des Mitnehmers 4 laufend ermittelt werden kann. Die Positionsermittlung erfolgt dabei - wie bei Weg-Codier-Systemen mit Codeschiene bekannt - durch dekodieren der Signale, die vom Abtastkopf 32A an die Auswertungseinheit 32B geliefert werden in geeigneter, dem Fachmann bekannter Technik, insbesondere rechnerimplementiert bzw. in Digitaltechnik. Beispielsweise kann ein Anlernen durch eine initialisieren Referenzfahrt des Mitnehmers 4 mit der Sensorvorrichtung 32 zwischen beiden Endpunkten A, B (FIG. 4A) erfolgen. Wie in FIG.3 ist die Code-Spur vorzugsweise, jedoch nicht zwingend als integraler Bestandteil der Seitenwandteile 38A der Führungsrinne 7 realisiert, d.h. nicht als separate Codeschiene vorgesehen. Neben einer optischen Abtastung ist auch eine elektromagnetische Abtastung oder eine Visuelle Abtastung mit Bilderkennungstechnik verwendbar.

Alle Systeme 10, 20, 30 nach FIG.1 bis FIG. 3 sind gegen störende Umgebungseinflüsse robust und insbesondere für den Einsatz im Freien geeignet, beispielsweise in der Schwerindustrie oder an großen Krananlagen, wie Containerbrücken helfen.

FIG.6 zeigt als Anwendungsbeispiel einen Brücken- oder Portalkran, hier genauer eine Containerbrücke 60 bzw. einen Ship-To-Shore Kran für ISO-Container 65. Die beispielhafte Containerbrücke 60 hat eine obere Kranbrücke 61 mit einer ersten Krankatze 62 und eine untere Kranbrücke 63 mit einer zweiten Krankatze 64, die hier jeweils linear verfahren, z.B. über eine Strecke von >10m. Beide Krankatzen 62, 64 sind typisch durch Energieketten 1 versorgt, z.B. zur Stromversorgung und Antriebssteuerung eines Containergeschirrs. Als Positions-Messsystem für die Steuerung der Krankatzen 62, 64 kann ein System 10, 20, 30 nach FIG.1-3, besonders bevorzugt ein System 10 nach FIG.1 vorgesehen werden. Dabei entfällt die Montage eins separaten Positions-Messsystems wie bisher üblich. Das System 10, 20, 30 nach FIG.1-3 wird dabei zusammen mit der Führungsrinne 7 und der Energiekette 1 mit installiert, z.B. auf einem Kranträger, d.h. zusätzlicher Montageaufwand entfällt. Zudem ist eine Leitungsverlegung vom der festen Anschlussstelle 5 der Energiekette (FIG.4A) zur Kransteuerung ohnehin typisch bereits vorgesehen. Auch in anderen Krantypen, z.B. RMG-Hafenkränen, und sonstigen Anwendungen der Schwerindustrie kann ein System 10, 20, 30 nach FIG.1-3 vorteilhaft genutzt werden, insbesondre zur Positionsüberwachung bzw. -Steuerung des versorgten Maschinenteils an welchem der Mitnehmer 4 befestigt ist.

FIG.4A-4B zeigen schließlich schematisch eine Variante eines Erkennungssystems 40 einer Energiekette 1, das auch ohne Führungsrinne 7 verwendbar ist. Hierbei sind die Referenzkomponenten 44, hier in Form von Funkschaltungen z.B. RFID-Transpondern, an jedem n-ten Kettenglied 1, z.B. an jedem zweiten oder dritten, oder auch jedem Kettenglied 1 der Energiekette 1 vorgesehen. Am Mitnehmer 4 ist eine erste Antenne 41 vorgesehen, welche beim Verfahren in Längsrichtung L über die erste Teilstrecke vom ersten Endpunkt A zur Mitte M des Gesamtwegs W, d.h. zum festen Anschlussstelle 5 der Energiekette, wirksam ist. Über diese Teilstrecke kann die erste Antenne 41 beim Fahren nacheinander die Referenzkomponenten 44 an den Kettengliedern 1 um ruhenden Untertrum erfassen, z.B. RFID-Kennungen, um daraus absolute Positionsinformation zu gewinnen. Nahe dem festen Anschlussstelle 5 ist eine stationäre zweite Antenne 42 vorgesehen, welche über die zweite Teilstrecke von der Mitte M des Gesamtwegs W zum zweiten Endpunkt B wirksam ist und Referenzkomponenten 44 im bewegten Obertrum 1B erfasst, um daraus absolute Positionsinformation zu gewinnen. Das Erkennungssystems 40 kann alternativ zur Positionsermittlung oder ergänzend hierzu auch genutzt werden um zu erkennen, ob die Energiekette 1 einen bestimmungsgemäßen bzw. korrekten Bewegungsablauf hat, z.B. kein ungewolltes Aufbäumen im Obertrum 1A auftritt. Vorzugsweise sind hierzu die Referenzkomponenten 44 an der im Umlenkbogen 1C innen liegenden Seite der Energiekette 1 vorgesehen (vgl. FIG.4A), z.B. an Querstegen 55 (FIG.5A). Die Referenzkomponenten 44 können alternativ z.B. an den Seitenlaschen 53, 54 bzw. Seitenteilen ausgewählter Kettenglieder 2 angeordnet sein (vgl. FIG.4B).

Die Referenzkomponenten 44 können z.B. in Form von nachrüstbaren Funk-Referenzmodulen 50 angebracht werden, welche in herkömmliche Querstege 55 der Kettenglieder 52A bzw. 52B (vgl. FIG.5A-5B) einsteckbar sind. Querstege 55 sind bei Kettengliedern 1 bzw. 52A, 52B typisch vorgesehen um die Seitenlaschen 53 bzw. 54 der Kettenglieder 1 bzw. 52A, 52B zu verbinden. FIG.5A zeigt rein beispielhaft Kettenglieder 52A, 52B mit abwechselnden Innen- und Außenlaschen für lange Gesamtwege W, die Erfindung ist jedoch mit beliebigen Energieketten 1 verwendbar.

Alternativ zum funkbasierten Prinzip nach FIG.4-5 ist auch eine rein optische Erkennung z.B. durch zählen der Querstege 55 mittels Lichtschranken möglich. Dabei wird ggf. noch ein dritter ortsfester Sensor im Endbereich nahe dem Endpunkt B vorgesehen, da in der Endstellung der Umlenkbogen 1C von der Mitte M typisch vertikal abgehoben ist, d.h. Querstege 55 hier schwer optisch erfassbar sind.

Die in FIG.6 dargestellte Anwendung eines Systems 10, 20, 30 nach der Erfindung in einem Kran 60 ist rein beispielhaft, die Erfindung ist in vielen Bereichen vorteilhaft einsetzbar, insbesondere bei Anwendungen mit langen Verfahrwegen in denen bspw. zu Automatisierungszwecken die Position des bewegten, von der Energiekette 1 versorgten Teils der Anlage/Maschine erfasst werden muss.

Die erfindungsgemäßen Systeme 10, 20, 30, 40 können daher insbesondere in Verbindung mit abgleitenden oder abrollenden Energieketten 1, die besonders für lange Verfahrwege geeignet sind, vorteilhaft eingesetzt werden, d.h. mit Energieketten 1 an sich bekannter Bauweise, bei welchen das bewegliche Obertrum 1A auf dem ruhenden Untertrum 1B abgleiten oder abrollen kann, wie in FIG.1-3 erkennbar.

### Bezugszeichenliste

**FIG. 1**
   1 Energieführungskette
   1A Obertrum
   1B Untertrum
   2 Kettenglied
   3 Leitung
   4 Mitnehmer
   6 Trägerelement (versorgter Teil)
   7 Führungsrinne
   8A, 8B Seitenwandteil (Führungsrinne)
   9 Montageprofil
   10 Positions-System
   12 Sensorvorrichtung
   12A Antennenvorrichtung
   12B Auswertungseinheit
   14 Referenzkomponente (Funk)
   15 Busleitung
   L Längsrichtung
**FIG.2**
   1 Energieführungskette
   7 Führungsrinne
   20 Positions-System
   22 Sensorvorrichtung
   22A Antennenvorrichtung
   22B Auswertungseinheit
   22C Abtastkopf (optisch)
   23 Lochspur (optisch)
   23A Loch
   24 erste Referenzkomponente (Funk)
   28A, 28B Seitenwandteil (Führungsrinne)
   L Längsrichtung
**FIG. 3**
   1 Energieführungskette
   4 Mitnehmer
   7 Führungsrinne
   30 Positions-System
   32 Sensorvorrichtung
   32A Abtastkopf (optisch)
   32B Auswertungseinheit
   33 Codespur (optisch)
   33A Schlitz
   38A, 38B Seitenwandteil (Führungsrinne)
   L Längsrichtung
FIG.4A-4B
   1 Energieführungskette
   1A Obertrum
   1B Untertrum
   1C Umlenkbogen
   2 Kettenglied
   4 Mitnehmer (bewegliche Anschlussstelle)
   5 feste/statische Anschlussstelle
   40 Positions-System
   41 erste Antenne
   42 zweite Antenne
   44 Referenzkomponente (Funk)
   A erste Endposition
   B zweite Endposition
   M Mitte
   W Gesamtweg
FIG.5A-5B
   50 Funk-Referenzmodul
   52A; 52B Kettenglied
   53, 54 Seitenlasche
   55 Quersteg
FIG.6
   60 Containerbrücke / Portalkran
   61 obere Brücke
   62 Krankatze
   63 untere Brücke
   64 Krankatze
   65 ISO-Container

## Patentansprüche

1. System (10; 20; 30) zur Positionsbestimmung mit einer Energieführungskette (1) zur Führung von Versorgungsleitungen, wobei die Energieführungskette ein erstes Trum (1B), das endseitig an einem Anschlusspunkt festgelegt ist, und ein bewegliches zweites Trum (1A) umfasst, das endseitig an einem Mitnehmer (4) festgelegt ist, wobei der Mitnehmer entlang einer Fahrstrecke hin- und her fahrbar ist; umfassend
eine Führungsanordnung (7) mit entlang der Fahrstrecke angeordneten Führungsbauteilen (8A, 8B; 28A, 28B; 38A, 38B) zur seitlichen Führung der Energieführungskette beim Verfahren; und
eine Sensorvorrichtung (12; 22; 32) zur Positionsbestimmung, welche am Mitnehmer (4) angebracht ist;
**dadurch gekennzeichnet, dass**
zumindest einige Führungsbauteile (8A, 8B; 28A, 28B; 38A, 38B) mindestens eine daran als Positionsreferenz dienende Referenzkomponente (14; 23A, 24; 33, 33A) aufweisen, und dass die Sensorvorrichtung (12; 22; 32) mit einzelnen Referenzkomponenten zusammenwirkt zur Positionsbestimmung.

2. System (40) zur Positionsbestimmung mit einer Energieführungskette (1) zur Führung von Versorgungsleitungen, wobei die Energieführungskette Kettenglieder (2) umfasst und die Energieführungskette ein erstes Trum (1B), das endseitig an einem stationären Anschlusspunkt (5) festgelegt ist, ein bewegliches zweites Trum (1A), das endseitig an einem fahrbaren Mitnehmer (4) festgelegt ist, welcher entlang einer Fahrstrecke hin- und her fahrbar ist, und dazwischen einen Umlenkbogen (1C) bildet; umfassend
eine erste Sensorvorrichtung (41) zur Positionsbestimmung, welche am Mitnehmer angebracht ist;
**dadurch gekennzeichnet, dass**
eine zweite Sensorvorrichtung (42) zur Positionsbestimmung ortsfest am stationären Anschlusspunkt (5) angebracht ist; und dass zumindest jedes n-te Kettenglied (2) mindestens eine daran befestigte Referenzkomponente (44) aufweist, und dass, abhängig von der Fahrstellung entlang der Fahrstrecke, die erste Sensorvorrichtung (41) oder die zweite Sensorvorrichtung (42) mit einzelnen Referenzkomponenten (44) der Kettenglieder (2) zusammenwirkt zur Positionsbestimmung.

3. System nach Anspruch 1 oder 2, **dadurch gekennzeichnet, dass** jede Sensorvorrichtung (12; 22; 32; 41, 42) mit den einzelnen Referenzkomponenten (14; 24; 33, 33A; 44) berührungslos zusammenwirkt, insbesondere elektromagnetisch, vorzugsweise per Funk, optisch und/oder akustisch, vorzugsweise per Ultraschall.

4. System nach Anspruch 1, 2 oder 3, **dadurch gekennzeichnet, dass** die Referenzkomponenten (14; 24; 33, 33A; 44) in vorbestimmten, insbesondere gleichmäßigen Abständen, angeordnet sind
und/oder
jede Referenzkomponente (14; 24; 44) eine eindeutige Kennung aufweist, welcher eine Position, insbesondere eine Absolutposition, entlang der Fahrstrecke zuordenbar ist.

5. System nach Anspruch 3 oder 4, **dadurch gekennzeichnet, dass** die Referenzkomponente (14; 24; 44) als sendefähige Funkschaltung ausgeführt ist und die Sensorvorrichtung einen entsprechenden Empfänger (12A, 12B; 22A, 22B; 41, 42) aufweist.

6. System nach einem der Ansprüche 3 bis 5, **dadurch gekennzeichnet, dass** die Referenzkomponente als Funkkomponente (14; 24; 44), nämlich als passive Funkschaltung, insbesondere RFID-Transponder, oder als aktive Funkschaltung ausgeführt ist und jede Sensorvorrichtung eine entsprechende Antennenanordnung (12A; 22A; 41, 42) umfasst.

7. System nach Anspruch 3, **dadurch gekennzeichnet, dass** das die mindestens eine Referenzkomponente (23A; 33A) als optische und/oder elektromagnetische Markierung, insbesondere als codierte Markierung (33A), ausgeführt ist die mittels eines optischen und/oder elektromagnetischen Sensors (22C; 32A) der Sensorvorrichtung erfassbar ist.

8. System nach Anspruch 1, insbesondere nach Anspruch 1 und 7, **dadurch gekennzeichnet, dass** die Führungsanordnung eine Führungsrinne (7) ist, wobei die Führungsbauteile Seitenwandteile (8A, 8B; 28A, 28B; 38A, 38B) umfassen,
- wobei die Seitenwandteile (8A, 8B; 28A, 28B; 38A, 38B) in Längsrichtung (L) an beiden Seiten entlang der Fahrstrecke aufeinanderfolgend ortsfest und gegenüberliegend angeordnet sind, und zumindest jedes n-te Seitenwandteil (8A, 8B; 28A, 28B; 38A, 38B) einer Seite der Führungsrinne jeweils mindestens eine Referenzkomponente (14; 23A, 24; 33, 33A) umfasst; und/oder
- wobei die Referenzkomponente (14, 24) vorzugsweise als separate Komponente am Seitenwandteil befestigt ist oder integraler Bestandteil (23A, 33) des Seitenwandteils ist.

9. System nach Anspruch 1, **dadurch gekennzeichnet, dass** die Führungsanordnung als Führungsbauteile entlang der Fahrstrecke in vorgegebenen Abständen zueinander verteilt befestigte Bodenführungselemente aufweist, wobei zumindest jedes n-te Bodenführungselement eine Referenzkomponente, vorzugsweise eine Funkkomponente, umfasst.

10. System nach Anspruch 2, **dadurch gekennzeichnet, dass** jede Referenzkomponente (50) einen Quersteg (55) eines Kettenglieds umfasst bzw. an einem Quersteg angebracht (55) ist und/oder insbesondere eine optisch und/oder elektromagnetisch erfassbare Markierung und/oder eine passive Funkkomponente (50) umfasst.

11. System nach einem der vorstehenden Ansprüche umfassend eine Anlagensteuerung zur Steuerung der Bewegung eines beweglichen Maschinenteils (62, 64) welcher den Mitnehmer (4) umfasst, **dadurch gekennzeichnet, dass** die Steuerung zur Positionsbestimmung des beweglichen Maschinenteils (62, 64) signaltechnisch mit der Sensorvorrichtung (12; 22; 32; 41, 42) verbunden ist.

12. Verwendung eines Seitenwandteils (8A, 8B; 28A, 28B; 38A, 38B) einer Führungsrinne für eine Energieführungskette (1) **dadurch gekennzeichnet, dass** am Seitenwandteil (8A, 8B; 28A, 28B; 38A, 38B) mindestens eine ortsfeste Referenzkomponente (14; 23A, 24; 33, 33A) vorgesehen ist, insbesondere eine Funkkomponente (14; 24) oder eine optisch und/oder elektromagnetisch erfassbare Markierung (23A, 33), wobei die Referenzkomponente (14; 23A, 24; 33, 33A) als Positionsreferenz mit einer Sensorvorrichtung zur Positionsbestimmung zusammenwirkt.

13. Kran (60), insbesondere Portalkran oder Brückenkran, wie Containerbrücke oder dgl., umfassend eine linear verfahrbare Krankatze (62, 64) und ein System (10; 20; 30; 40) nach einem der Ansprüche 1 bis 11, insbesondere nach Anspruch 1, wobei die Krankatze (62, 64) mitnehmerseitig mit der Energieführungskette (1) verbunden ist und der Kran eine Steuerung umfasst, welche signaltechnisch mit der Sensorvorrichtung verbunden ist.

14. Verwendung eines Systems (10; 20; 30; 40) nach einem der Ansprüche 1 bis 11 zur kontinuierlichen Messung der Absolutposition eines von der Energieführungskette (1) versorgten fahrbaren Maschinen- oder Anlagenteils, insbesondere einer linear verfahrbaren Krankatze (62, 64).

## Claims

1. A system (10; 20; 30) for position determination with an energy guide chain (1) for guiding supply lines, the energy guide chain comprising a first run (1B), which is fixed at the end to a connection point, and a mobile second run (1A), which is fixed at the end to a moving end (4), the moving end being displaceable back and forth along a route, comprising
a guide arrangement (7) with guide components (8A, 8B; 28A, 28B; 38A, 38B) arranged along the route for lateral guidance of the energy guide chain during displacement and
a sensor device (12; 22; 32) for position determination which is mounted at the moving end (4),
**characterized in that**
at least some guide components (8A, 8B; 28A, 28B; 38A, 38B) have thereon at least one reference component (14; 23A, 24; 33, 33A) serving as position reference, and **in that** the sensor device (12; 22; 32) interacts with individual reference components for position determination.

2. A system (40) for position determination with an energy guide chain (1) for guiding supply lines, the energy guide chain comprising chain links (2) and the energy guide chain comprising a first run (1B) which is fixed at the end to a stationary connection point (5) and a mobile second run (1A), which is fixed at the end to a displaceable moving end (4) which is displaceable back and forth along a route and forms therebetween a deflection arc (1C), comprising
a first sensor device (41) for position determination which is mounted at the moving end,
**characterized in that**
a second sensor device (42) for position determination is mounted stationarily at the stationary connection point (5),
and **in that** at least every n^{th} chain link (2) has at least one reference component (44) mounted thereon, and **in that**, depending on the traveling position along the route, the first sensor device (41) or the second sensor device (42) interacts with individual reference components (44) of the chain links (2) for position determination.

3. The system according to Claim 1 or 2, **characterized in that** each sensor device (12; 22; 32; 41, 42) interacts contactlessly with the individual reference components (14; 24; 33, 33A; 44), in particular electromagnetically, preferably by radio, optically and/or acoustically, preferably by ultrasound.

4. The system according to Claim 1, 2 or 3, **characterized in that** the reference components (14; 24; 33, 33A; 44) are arranged in a predetermined, in particular uniform, spacing
and/or
each reference component (14; 24; 44) has a unique identifier which can be associated with a position, in particular an absolute position, along the route.

5. The system according to Claim 3 or 4, **characterized in that** the reference component (14; 24; 44) takes the form of a radio circuit with transmit capability and the sensor device has a corresponding receiver (12A, 12B; 22A, 22B; 41, 42).

6. The system according to one of Claims 3 to 5, **characterized in that** the reference component takes the form of a radio component (14; 24; 44), namely a passive radio circuit, in particular an RFID transponder, or an active radio circuit and each sensor device comprises a corresponding antenna arrangement (12A; 22A; 41, 42).

7. The system according to Claim 3, **characterized in that** the at least one reference component (23A; 33A) takes the form of optical and/or electromagnetic markings, in particular encoded markings (33A), which are detectable using an optical and/or electromagnetic sensor (22C; 32A) of the sensor device.

8. The system according to Claim 1, in particular according to Claims 1 and 7, **characterized in that** the guide arrangement is a guide channel (7), wherein the guide components comprise side wall parts (8A, 8B; 28A, 28B; 38A, 38B),
- wherein the side wall parts (8A, 8B; 28A, 28B; 38A, 38B) are arranged stationarily in the longitudinal direction (L) in a continuous succession on both sides along the route, and at least every n^{th} side wall part (8A, 8B; 28A, 28B; 38A, 38B) of one side of the guide channel in each case comprises at least one reference component (14; 23A, 24; 33, 33A), and/or
- wherein the reference component (14, 24) is preferably fastened as a separate component to the side wall part or is an integral component (23A, 33) of the side wall part.

9. The system according to Claim 1, **characterized in that** the guide arrangement has as its guide components floor guide elements fastened distributed at a predetermined mutual spacing along the route, wherein at least every n^{th} floor guide element comprises a reference component, preferably a radio component.

10. The system according to Claim 2, **characterized in that** each reference component (50) comprises a crosspiece (55) of a chain link or is mounted on a crosspiece (55) and/or in particular comprises optically and/or electromagnetically detectable markings and/or a passive radio component (50).

11. The system according to one of the preceding claims comprising an installation control system for controlling the movement of a mobile machine part (62, 64) which comprises the moving end (4), **characterized in that** the control system is connected for signaling to the sensor device (12; 22; 32; 41, 42) for position determination of the mobile machine part (62, 64).

12. Use of a side wall part (8A, 8B; 28A, 28B; 38A, 38B) of a guide channel for an energy guide chain (1), **characterized in that** at least one stationary reference component (14; 23A, 24; 33, 33A), in particular a radio component (14; 24) or optically and/or electromagnetically detectable markings (23A, 33), is provided on the side wall part (8A, 8B; 28A, 28B; 38A, 38B), wherein the reference component (14; 23A, 24; 33, 33A) interacts as a position reference with a sensor device for position determination.

13. A crane (60), in particular a gantry crane or bridge crane, such as a container gantry crane or the like, comprising a linearly displaceable crane trolley (62, 64) and a system (10; 20; 30; 40) according to one of Claims 1 to 11, in particular according to Claim 1, wherein the crane trolley (62, 64) is connected at the moving end to the energy guide chain (1) and the crane comprises a control system which is connected for signaling to the sensor device.

14. Use of a system (10; 20; 30; 40) according to one of Claims 1 to 11 for continuous measurement of the absolute position of a displaceable machine or installation part, in particular a linearly displaceable crane trolley (62, 64), supplied by the energy guide chain (1).

## Revendications

1. Système (10; 20; 30) pour la détermination de position, avec une chaîne porte-câbles (1) pour le guidage de lignes d'alimentation, la chaîne porte-câbles comprenant un premier brin (1B) qui est fixé à son extrémité à un point de raccordement et un deuxième brin mobile (1A) qui est fixé à son extrémité à un entraîneur (4), l'entraîneur pouvant être déplacé en va-et-vient le long d'un trajet de déplacement; comprenant un agencement de guidage (7) avec des éléments de guidage (8A, 8B; 28A, 28B; 38A, 38B) disposés le long du trajet de déplacement pour le guidage latéral de la chaîne porte-câbles lors du déplacement; et un dispositif capteur (12; 22; 32) pour la détermination de position, qui est monté sur l'entraîneur (4);
**caractérisé en ce que**
au moins quelques éléments de guidage (8A, 8B; 28A, 28B; 38A, 38B) présentent sur ceux-ci au moins un composant de référence (14; 23A, 24; 33, 33A) servant de référence de position et **en ce que** le dispositif capteur (12; 22; 32) coopère avec des composants de référence individuels pour la détermination de position.

2. Système (40) pour la détermination de position, avec une chaîne porte-câbles (1) pour le guidage de lignes d'alimentation, dans lequel la chaîne porte-câbles comprend des maillons de chaîne (2) et la chaîne porte-câbles formant un premier brin (1B) qui est fixé à l'extrémité à un point de raccordement stationnaire (5), un deuxième brin mobile (1A) qui est fixé à l'extrémité à un entraîneur mobile (4) qui peut être déplacé en va-et-vient le long d'un trajet de déplacement et la chaîne porte-câbles formant un arc de déviation (1C) entre lesdits brins; comprenant
un premier dispositif capteur (41) pour la détermination de position, dispositif capteur qui est monté sur l'entraîneur;
**caractérisé en ce que**
un deuxième dispositif capteur (42) pour la détermination de position est monté de manière fixe auprès du point de raccordement stationnaire (5); et **en ce qu'**au moins chaque n-ième maillon de chaîne (2) présente au moins un composant de référence (44) fixé sur celui-ci et **en ce que**, en fonction de la position de déplacement le long du trajet de déplacement, le premier dispositif capteur (41) ou le deuxième dispositif capteur (42) coopère avec des composants de référence individuels (44) des maillons de chaîne (2) pour la détermination de position.

3. Système selon la revendication 1 ou 2, **caractérisé en ce que** chaque dispositif capteur (12; 22; 32; 41, 42) coopère sans contact avec les différents composants de référence (14; 24; 33, 33A; 44), notamment par voie électromagnétique, de préférence par radio, par voie optique et/ou acoustique, de préférence par ultrasons.

4. Système selon la revendication 1, 2 ou 3, **caractérisé en ce que** les composants de référence (14; 24; 33, 33A;) sont disposés à des distances prédéterminées, notamment égales, et/ou
chaque composant de référence (14; 24; 44) présente une identification univoque à laquelle peut être attribuée une position, en particulier une position absolue, le long du trajet de déplacement.

5. Système selon la revendication 3 ou 4, **caractérisé en ce que** le composant de référence (14; 24; 44) est réalisé sous la forme d'un circuit radio capable d'émettre et le dispositif capteur comporte un récepteur correspondant (12A, 12B; 22A, 22B; 41, 42).

6. Système selon l'une des revendications 3 à 5, **caractérisé en ce que** le composant de référence est réalisé sous la forme d'un composant radio (14; 24; 44), à savoir un circuit radio passif, notamment un transpondeur RFID, ou un circuit radio actif, et chaque dispositif capteur comprend un agencement d'antenne (12A; 22A, 41, 42) correspondant.

7. Système selon la revendication 3, **caractérisé en ce que** ledit au moins un composant de référence (23A; 33A) est réalisé sous la forme d'un marquage optique et/ou électromagnétique, en particulier d'un marquage codé (33A), qui peut être détecté au moyen d'un capteur optique et/ou électromagnétique (22C; 32A) du dispositif capteur.

8. Système selon la revendication 1, en particulier selon les revendications 1 et 7, **caractérisé en ce que** l'agencement de guidage est une goulotte de guidage (7), les éléments de guidage comprenant des parties de paroi latérale (8A, 8B; 28A, 28B; 38A, 38B),
- les parties de paroi latérale (8A, 8B; 28A, 28B; 38A, 38B) étant disposées de manière fixe et opposée les unes aux autres dans la direction longitudinale (L) des deux côtés le long du trajet de déplacement, et au moins chaque n-ième partie de paroi latérale (8A, 8B; 28A, 28B; 38A, 38B) d'un côté de la goulotte de guidage comprenant respectivement au moins un composant de référence (14; 23A, 24; 33, 33A); et/ou
- le composant de référence (14, 24) étant de préférence fixé à la partie de paroi latérale en tant que composant séparé ou faisant partie intégrante (23A, 33) de la partie de paroi latérale.

9. Système selon la revendication 1, **caractérisé en ce que** l'agencement de guidage présente, en tant qu'éléments de guidage, des éléments de guidage au sol fixés de manière répartie le long du trajet à des distances prédéfinies les uns des autres, au moins chaque n-ième élément de guidage au sol comprenant un composant de référence, de préférence un composant radio.

10. Système selon la revendication 2, **caractérisé en ce que** chaque composant de référence (50) comprend une traverse (55) d'un maillon de chaîne ou est fixé (55) à une traverse et/ou comprend notamment un marqueur détectable optiquement et/ou électromagnétiquement et/ou un composant radio passif (50) .

11. Système selon l'une des revendications précédentes, comprenant une commande d'installation pour la commande du mouvement d'une partie de machine mobile (62, 64), qui comprend l'entraîneur (4), **caractérisé en ce que** la commande pour la détermination de position de la partie de machine mobile (62, 64) est reliée au dispositif capteur (12; 22; 32; 41, 42) par une technique de signalisation.

12. Utilisation d'une partie de paroi latérale (8A, 8B; 28A, 28B; 38A, 38B) d'une goulotte de guidage pour une chaîne porte-câbles (1), **caractérisée en ce qu'**au moins un composant de référence fixe (14; 23A, 24; 33, 33A), en particulier un composant radio (14 ; 24) ou un marquage (23A, 33) détectable optiquement et/ou
électromagnétiquement, est prévu à la partie de paroi latérale (8A, 8B; 28A, 28B; 38A, 38B), le composant de référence (14; 23A, 24; 33, 33A) coopérant en tant que référence de position avec un dispositif de détection pour la détermination de position.

13. Grue, en particulier grue à portique ou grue à pont, comme un pont pour conteneurs ou similaire, comprenant un chariot de grue (62, 64) déplaçable linéairement et un système (10; 20; 30; 40) selon l'une des revendications 1 à 11, en particulier selon la revendication 1, dans laquelle le chariot de grue (62, 64) est relié côté entraîneur à la chaîne porte-câbles (1) et la grue comprend un dispositif de commande qui est relié au dispositif capteur par une technique de signalisation.

14. Utilisation d'un système (10; 20; 30; 40) selon l'une des revendications 1 à 11 pour la mesure en continu de la position absolue d'une partie mobile de machine ou de système alimentée par la chaîne porte-câbles (1), en particulier d'un chariot de grue (62, 64) pouvant se déplacer linéairement.
